# EUROPÄISCHE PATENTSCHRIFT

(11) **EP 2 409 873 B1**
(45) Veröffentlichungstag und Bekanntmachung des Hinweises auf die Patenterteilung: **24.10.2012**
(21) Anmeldenummer: 11005878.1
(22) Anmeldetag: 18.07.2011
(51) Int. Cl.: B60K 23/00, F16H 3/12

(54) **Verfahren zum Betrieb eines Antriebsstrangs eines Kraftfahrzeugs und entsprechender Antriebsstrang**
Method for operating a power transmission of a motor vehicle and power transmission
Procédé destiné au fonctionnement d'un conducteur de commande d'un véhicule automobile et le conducteur de commande correspondant

(30) Priorität: 23.07.2010 US 367181 P; 08.02.2011 DE 102011010616
(43) Veröffentlichungstag der Anmeldung: 25.01.2012
(73) Patentinhaber: Magna Powertrain AG & Co. KG, 8502 Lannach (AT)
(72) Erfinder: Prix, Daniel, 9065 Ebental (AT); Scheucher, Rene, 8342 Gnas (AT)
(74) Vertreter: Rausch, Gabriele

(56) Entgegenhaltungen:
- US-A- 6 008 606
- US-A1- 2002 073 802
- US-A1- 2008 047 798
- US-A1- 2008 182 693

## Beschreibung

Die vorliegende Erfindung betrifft ein Verfahren zum Betrieb eines Antriebsstrangs eines Kraftfahrzeugs.

Zur Verbesserung der Fahrdynamik finden bei Kraftfahrzeugen Antriebsstränge Anwendung, die sich an die jeweils vorliegenden Fahrbedingungen anpassen lassen. Dabei gelangen oftmals Trennkupplungen zum Einsatz, die unter anderem dazu dienen, bestimmte Komponenten des Antriebsstrangs selektiv miteinander zu koppeln oder voneinander zu trennen. Beispielsweise kann es bei Hybridfahrzeugen in bestimmten Fahrsituationen vorteilhaft sein, einen Elektromotor des Hybridantriebs von den anderen Komponenten des Antriebsstrangs zu trennen, etwa wenn ein Verbrennungsmotor des Hybridantriebs das geforderte Antriebsdrehmoment liefert und die Antriebsleistung des Elektromotors nicht benötigt wird. Durch eine Trennkupplung kann auch eine Sicherheitsabschaltung bei Betriebsstörungen sichergestellt werden. Letztlich tragen derartige Trennkupplungen somit zur Verbesserung des Gesamtwirkungsgrades des Antriebsstrangs, der Fahrdynamik, des Verhaltens des Fahrzeugs bei einem ESP-Eingriff und des Verhaltens bei Betriebsstörung der elektrischen Traktionskomponenten bei.

Damit die Vorteile der Trennkupplung in möglichst großem Umfang zum Tragen kommen, ist deren effiziente Ansteuerung von wesentlicher Bedeutung. Insbesondere soll ein Einrücken der Kupplung möglichst schnell und zuverlässig erfolgen, damit der Antriebsstrang schnell an geänderte Fahrzustände angepasst werden kann.

Ein Verfahren zum Betrieb eines Antriebsstrangs eines Kraftfahrzeugs gemäß dem Oberbegriff von Anspruch 1 sowie einen Antriebsstrang gemäß dem Oberbegriff von Anspruch 8 ist aus US 6008606 bekannt.

Es ist daher eine Aufgabe der Erfindung, ein zuverlässiges und hochdynamisches Verfahren zum Betrieb eines Antriebsstrangs zu schaffen, der durch eine Kupplung selektiv mit einem Motor koppelbar ist.

Diese Aufgabe wird durch ein Verfahren mit den Merkmalen des Anspruchs 1 gelöst.

Erfindungsgemäß umfasst das Verfahren zum Betrieb eines Antriebsstrangs eines Kraftfahrzeugs mit einem Motor, der mittels einer durch einen Aktuator aktuierbaren Kupplung selektiv mit dem Antriebsstrang koppelbar ist, die ein erstes, einer Antriebswelle des Motors zugeordnetes Kupplungsteil und ein zweites, dem Antriebsstrang zugeordnetes Kupplungsteil aufweist, beim Einrücken der Kupplung die folgenden Schritte:
- Beschleunigung des ersten Kupplungsteils durch den Motor zur Verringerung einer Drehzahldifferenz zwischen dem ersten Kupplungsteil und dem zweiten Kupplungsteil bei gleichzeitiger Aktivierung des Aktuators während einer ersten Aktuierungsphase zur Überwindung eines Totraums der Kupplung, bei dem die Kupplungsteile noch nicht miteinander in Eingriff sind,
- Aussetzen der Aktivierung des Aktuators nach Überwindung des Totraums und vor Ineingriffbringen der Kupplungsteile, solange eine vorgegebene Drehzahldifferenz noch nicht erreicht ist,
- erneute Aktivierung des Aktuators während einer zweiten Aktuierungsphase zum Ineingriffbringen der Kupplungsteile, wenn die vorgegebene Drehzahldifferenz erreicht oder unterschritten wird.

Mit anderen Worten wird zunächst die Drehzahl des ersten Kupplungsteils mit der Drehzahl des zweiten Kupplungsteils synchronisiert, indem der Motor das erste Kupplungsteil beschleunigt. Unter einer abgeschlossenen Synchronisierung ist ein Zustand zu verstehen, in dem die beiden Kupplungsteile eine vorgegebene Drehzahldifferenz aufweisen, die in der Regel möglichst vergleichsweise klein gewählt wird, um ein problemloses Einrücken der Kupplung zu ermöglichen.Die vorgegebene Drehzahldifferenz ist insbesondere so bemessen, dass der Einrückvorgang ohne Beeinträchtigung des Fahrkomforts durchgeführt werden kann und gleichzeitig eine Aktuierungszeit gering gehalten wird.

Bei Betrieb des Fahrzeugs und in einem geöffneten Zustand der Kupplung dreht sich das erste Kupplungsteil in der Regel nicht oder nur langsam, während das zweite Kupplungsteil mit der Drehzahl des Antriebsstrangs rotiert. Die Drehzahl des ersten Kupplungsteils muss daher erhöht werden.

Zur Verbesserung der Stelldynamik der Kupplung wird bereits während der Beschleunigung des ersten Kupplungsteils der die Kupplung aktuierende Aktuator aktiviert (erste Aktuierungsphase), um den Totraum der Kupplung zu überwinden. D.h. der zur Synchronisierung benötigte Zeitraum wird gleichzeitig zur Überwindung des Totraums der Kupplung genutzt.

Unter einem "Totraum" der Kupplung ist beispielsweise ein Abstand zwischen den Kupplungsteilen in einem offenen Zustand der Kupplung zu verstehen, der durchfahren werden muss, bevor die Kupplungsteile in Kontakt miteinander gebracht werden und ein Eingriff der Kupplungsteile erfolgt.

Solange die Synchronisierung noch nicht abgeschlossen ist und die vorgegebene Drehzahldifferenz noch nicht erreicht oder unterschritten worden ist, wird die Aktivierung des Aktuators in einem Aktuierungszustand unterbrochen, in dem die Kupplungsteile kurz vor einem Eingriff stehen. In diesem Zustand ist der Totraum der Kupplung bereits fast vollständig überwunden worden.

Der Aktuator wird erneut aktiviert (zweite Aktuierungsphase), wenn die vorgegebene Drehzahldifferenz erreicht oder unterschritten wird, sodass die Kupplungsteile in Eingriff gebracht werden und der Einrückvorgang damit abgeschlossen ist.

Letztlich wird somit ein Zeitraum, der zur Beschleunigung des ersten Kupplungsteils zum Erreichen einer vorgegebenen Differenz zwischen der Drehzahl des ersten Kupplungsteils und der Drehzahl des zweiten Kupplungsteils erforderlich ist, zur Überwindung des Totraums der Kupplung genutzt, um die Aktuierungsdynamik der Kupplung zu erhöhen. Falls der Totraum der Kupplung bereits überwunden wurde, bevor die vorgegebene Drehzahldifferenz erreicht wurde, wird die Aktivierung des Aktuators kurz vor einem Ineingriffbringen der Kupplungsteile ausgesetzt.

Weitere Ausführungsformen der Erfindung sind in der Beschreibung, den Ansprüchen und den Zeichnungen angegeben.

Dem Aktuator kann eine Überwachungseinrichtung zugeordnet sein, mit der zumindest während der zweiten Aktuierungsphase ein Überwachungssignal erzeugt wird, das eine das Ineingriffbringen der Kupplung verhindernde Situation anzeigt. Bei einer Klauenkupplung kann eine solche Situation beispielsweise eine Zahn-auf-Zahn-Stellung der beiden Kupplungsteile sein. Die Überwachungseinrichtung überwacht zumindest während der zweiten Aktuierungsphase das Einrücken der Kupplung und liefert ein Überwachungssignal, das beispielsweise zur Optimierung der Ansteuerung der Kupplung bzw. des sie aktuierenden Aktuators genutzt werden kann.

Insbesondere umfasst der Aktuator einen elektrisch betriebenen Aktuatormotor. In diesem Fall kann durch die Überwachungseinrichtung zur Erzeugung des Überwachungssignals die an dem Aktuator anliegende Spannung und/oder an dem Aktuator anliegende Strom bestimmt werden.

Die Aktivierung des Aktuators kann während der zweiten Aktuierungsphase zumindest so lange gedrosselt werden, solange das Überwachungssignal einen Schwellenwert überschreitet oder unterschreitet. Durch diese Vorgehensweise wird eine Blockade eines Aktuierungsmechanismus des Aktuators bei Vorliegen der vorstehend beschriebenen, das Ineingriffbringen der Kupplung verhindernden Situation vermieden. Insbesondere wird überwacht, ob an dem Aktuatormotor ein Stromanstieg zu beobachten ist, der beispielsweise bei einer Klauenkupplung eine Zahn-auf-Zahn-Stellung der Kupplungsteile anzeigen würde.

Gemäß einer Ausführungsform ist dem Aktuator ein Energiespeicher zugeordnet, der während einer das Ineingriffbringen der Kupplung verhindernden Situation - insbesondere während der gedrosselten Aktivierung des Aktuators - zumindest einen Teil der durch den Aktuator erzeugten Aktuierungsbewegung in eine Aktuierungsenergie umgewandelt und diese speichert. Die von dem Energiespeicher aufgenommene Aktuierungsenergie kann abgegeben werden, sobald die das Ineingriffbringen der Kupplung verhindernde Situation aufgehoben wird. Dadurch wird die Belastung der Kupplungsteile und der Komponenten des Aktuators reduziert, während gleichzeitig ein schnelles Einrücken der Kupplung sichergestellt ist, wenn die das Ineingriffbringen der Kupplung verhindernde Situation - beispielsweise eine Zahn-auf-Zahn-Stellung der Kupplungsteile einer Klauenkupplung - nicht mehr vorliegt.

Um die Einrückdynamik der Kupplung zu verbessern, kann der zu überwindende Totraum der Kupplung auf der Basis von Daten eines Sensors ermittelt werden, mit dem eine Stellung des ersten Kupplungsteils und/oder des zweiten Kupplungsteils bestimmbar ist. Beispielsweise kann bei einer geeigneten Ausgestaltung des Sensors der tatsächlich vorliegende Abstand zwischen den beiden Kupplungsteilen in einem ausgerückten Zustand der Kupplung bestimmt werden und daraus - unter Berücksichtigung der geometrischen Gegebenheiten der Kupplungsteile, etwa die Ausgestaltung der Zähne einer Klauenkupplung - ein zu überwindender Totraum berechnet werden. Es ist auch möglich, die Stellung nur eines der beiden Kupplungsteile zu bestimmen, wenn beispielsweise das andere Kupplungsteil axialfest angeordnet ist. Der Sensor kann beispielsweise einen Drehwinkelgeber umfassen, der die Stellung einer Antriebswelle des Motors - und damit indirekt die Stellung des ersten Kupplungsteils - oder die Stellung des ersten Kupplungsteils bestimmt.

Die Erfindung betrifft ferner einen Antriebsstrang eines Kraftfahrzeugs mit einem Motor, der mittels einer durch einen Aktuator aktuierbaren Kupplung selektiv mit dem Antriebsstrang koppelbar ist, die ein erstes, einer Antriebswelle des Motors zugeordnetes Kupplungsteil und ein zweites, dem Antriebsstrang zugeordnetes Kupplungsteil aufweist, wobei dem Motor eine Motorsteuereinheit zugeordnet ist und dem Aktuator eine Aktuatorsteuereinheit zugeordnet ist, die derart ausgestaltet sind, dass zumindest eine der vorstehend beschriebenen Ausführungsformen des erfindungsgemäßen Verfahrens durchführbar ist.

Die Motorsteuereinheit und die Aktuatorsteuereinheit können eine Baueinheit, insbesondere eine integrierte Steuereinheit bilden.

Wie vorstehend bereits erwähnt, kann die Kupplung eine Klauenkupplung sein.

Der Motor ist insbesondere ein Elektromotor, der beispielsweise Bestandteil eines Hybridantriebs des Kraftfahrzeugs ist.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1: eine Perspektivansicht eines Teils einer Ausführungsform des erfindungsgemäßen Antriebsstrangs mit einer Klauenkupplung und einem der Kupplung zugeordneten Aktuator,
- Fig. 2: eine Schnittansicht durch die Kupplung und den Aktuator der Fig. 1,
- Fig. 3: eine Perspektivansicht eines Teils einer weiteren Ausführungsform des erfindungsgemäßen Antriebsstrangs mit einer Klauenkupplung und einem der Kupplung zugeordneten Aktuator,
- Fig. 4: eine Schnittansicht durch die Kupplung und den Aktuator der Fig. 3.

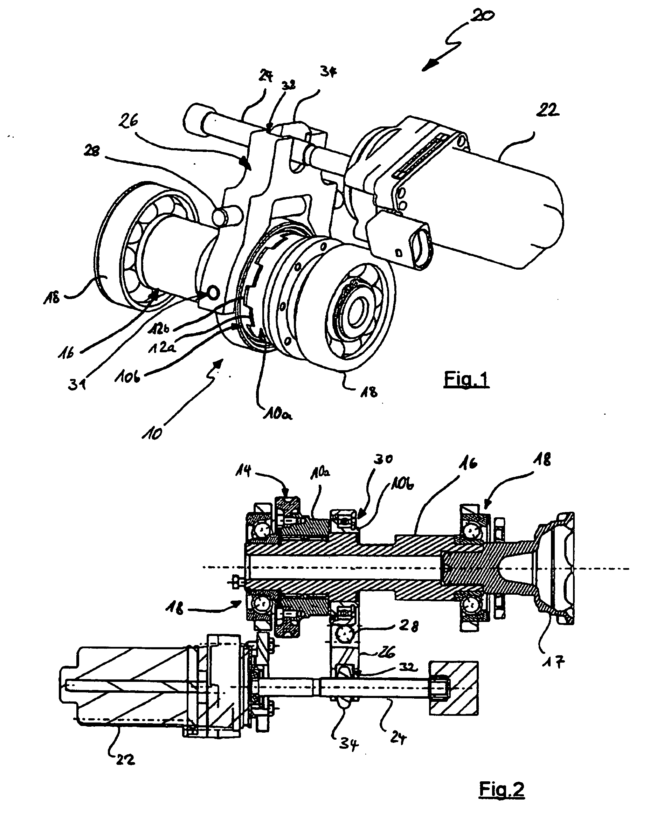

Die Figuren 1 und 2 zeigen eine Klauenkupplung 10 mit einem Kupplungsteil 10a und einem Kupplungsteil 10b. Die Kupplungsteile 10a, 10b weisen jeweils komplementäre Zähne 12a bzw. Ausnehmungen 12b auf. In dem in Fig. 1 gezeigten Zustand ist die Klauenkupplung 10 in Eingriff.

Das Kupplungsteil 10a ist - wie in Fig. 2 gezeigt - drehfest mit einem Zahnrad 14 verbunden, das beispielsweise von einem nicht gezeigten Elektromotor eines Hybridantriebs eines Kraftfahrzeugs zu einer Drehbewegung angetrieben werden kann. In dem gezeigten eingerückten Zustand der Kupplung 10 wird diese Bewegung auf das Kupplungsteil 10b übertragen, das wiederum drehfest aber axial verschieblich mit einer mit Komponenten eines Antriebsstrang des Kraftfahrzeugs antriebswirksam gekoppelten Antriebswelle 16 verbunden ist. In der dargestellten Ausführungsform ist die Antriebswelle 16 mit einem Radflansch 17 drehfest gekoppelt. Ferner ist die Antriebswelle 16 durch Lager 18 an dem Kraftfahrzeug gelagert.

Es versteht sich, dass die Antriebswelle 16 bei alternativen Ausgestaltungen des Antriebsstrangs mit dem Elektromotor verbunden sein kann, während das Kupplungsteil 10a mit weiteren Komponenten des Antriebsstrangs in antriebswirksamer Verbindung steht.

Bei einem Auskuppeln der Kupplung 10 - etwa wenn ein Beitrag des Elektromotors zum Vortrieb des Fahrzeugs nicht mehr benötigt wird - wird beispielsweise der das Zahnrad 14 antreibende Elektromotor von Momenten- auf Drehzahlregelung umgeschaltet und die Kupplung 10 läuft damit idealerweise lastlos. In einem realen Betrieb liegen an der Kupplung jedoch auch in diesem Zustand Restmomente an, die zum Ausrücken der Kupplung 10 von einem Aktuator 20 überwunden werden müssen, um die Kupplungsteile 10a, 10b voneinander zu trennen.

Der Aktuator 20 umfasst einen Aktuatormotor 22, dessen Antriebsdrehbewegung über eine Spindel 24 und eine Mutter 34 in eine Verschwenkung einer als Schwenkgabel ausgestalteten Schaltgabel 26 umgesetzt wird. Die Schaltgabel 26 ist in etwa mittig durch einen Lagerstift 28 gelagert. Eine Verbindung der Schaltgabel 26 mit dem Kupplungsteil 10b umfasst ein Rillenkugellager 30 (Fig. 2), das Relativbewegungen zwischen der Gabel 26 und dem Kupplungsteil 10b aufnimmt. Das Rillenkugellager 30 steht wiederum über ein Drehgelenk 31 mit der Schaltgabel 26 in Verbindung. Spindelseitig ist die Schaltgabel 26 mit einem Schlitz 32 versehen, in dem die auf der Spindel 24 montierte Mutter 34 mit integriertem Gleitstück eingesetzt ist. Die Mutter 34 ist vorzugsweise zur vereinfachten Herstellung als auch zur Reibungsminimierung aus Kunststoff hergestellt.

Bei einer Aktivierung des Aktuatormotors 22 wird die Schaltgabel 26 durch eine Bewegung der Mutter 34 zu dem Aktuatormotor 22 hin verschwenkt, sodass das Kupplungsteil 10b von dem Kupplungsteil 10a weg bewegt wird. Das Kupplungsteil 10b ist zu diesem Zweck nach Art einer Schiebemuffe durch eine Verzahnung drehfest aber axial verschieblich mit der Antriebswelle 16 verbunden.

Die Aktivierung des Aktuatormotors 22 erfolgt beispielsweise für einen vorgegebenen Zeitraum, sodass das Kupplungsteil 10b in einem geöffneten Zustand der Kupplung 10 eine vordefinierte Position in Bezug auf das Kupplungsteil 10a einnimmt.

Falls die Kupplung wieder geschlossen werden soll, müssen die Kupplungsteile 10a, 10b synchronisiert werden, d. h. sie müssen auf ein im Wesentlichen gleiches Drehzahlniveau gebracht werden.

Dazu wird das ruhende oder sich langsamer als das mit dem Antriebsstrang gekoppelte Kupplungsteil 10b drehende Kupplungsteil 10a durch den Elektromotor beschleunigt. Um die dazu benötigte Zeit effizient zu nutzen, wird gleichzeitig der Aktuatormotor 22 aktiviert, um das Kupplungsteil 10b an das Kupplungsteil 10a heranzuführen. Falls eine vorbestimmte Drehzahldifferenz zwischen den Kupplungsteilen 10a, 10b noch nicht erreicht ist, obwohl der Totraum der Kupplung 10 bereits im Wesentlichen vollständig durchfahren wurde und ein Eingriff der Zähne 12a bzw. Ausnehmungen 12b kurz bevor steht, wird die Aktivierung des Aktuatormotors 22 unterbrochen und der bis dahin erreichte Abstand zwischen den Kupplungsteilen 10a, 10b wird aufrecht erhalten. Währenddessen wird die Beschleunigung des Kupplungsteils 10a fortgesetzt, bis die vorgegebene Drehzahldifferenz zwischen den Kupplungsteilen 10a, 10b erreicht oder unterschritten wird. Dann kann das Einrücken der Kupplung 10 fortgesetzt werden, d. h. der Aktuatormotor 22 wird erneut aktiviert, um das Einrücken der Kupplung 10 abzuschließen.

Bei dem Einrückvorgang der Kupplung 10 kann die Situation auftreten, dass die Zähne 12a der Kupplungsteile 10a, 10b aufeinandertreffen, sodass ein Einrücken der Klauenkupplung 10 nicht ohne weiteres möglich ist. Diese Situation lässt sich beispielsweise durch einen Stromanstieg an dem Aktuatormotor 22 erkennen. Um eine Schädigung der Komponenten des Aktuators 20 und der Kupplung 10 zu verhindern, wird die an dem Aktuatormotor 22 angelegte Spannung begrenzt und damit die Aktuierung gedrosselt. Dadurch wird insbesondere ein Blockieren des Spindel-Mutter-Mechanismus verhindert.

Der Aktuator 20 kann einen Puffer- oder Energiespeichermechanismus aufweisen, der bei reduzierter oder gedrosselter Aktivierung des Aktuatormotors 22 die von diesem erzeugte Aktuierungsbewegung aufnimmt und so lange speichert, bis die Zähne 12a komplementären Ausnehmungen 12b gegenüberstehen. Das dann mögliche Einrücken der Kupplung 10 wird durch eine Abgabe der in dem Puffermechanismus gespeicherten Aktuierungsbewegung, beispielsweise in Form einer Verformung eines elastischen Elements, unterstützt.

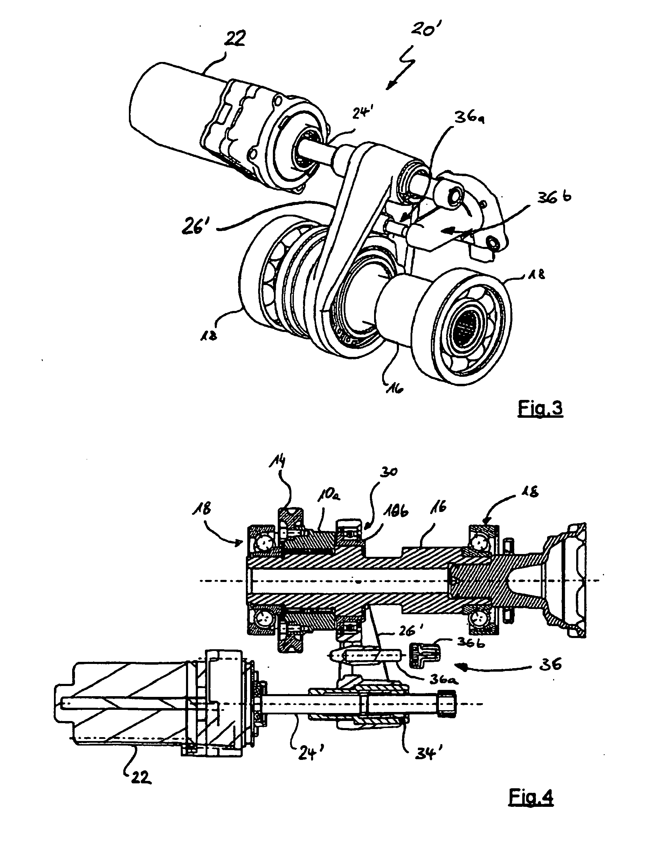

Die Figuren 3 und 4 zeigen eine alternative Ausführungsform 20' des Aktuators mit einer axial verschiebbaren - aber nicht verschwenkbaren - Schaltgabel 26'. Die Schaltgabel 26' wirkt mit einer Mutter 34' zusammen, die über ein Bewegungsgewinde mit einer Spindel 24' in Verbindung steht. Die Mutter 34' kann direkt mit der Gabel 26' verbunden sein. Alternativ kann zwischen den beiden genannten Komponenten beispielsweise eine Feder (nicht gezeigt) vorgesehen sein, die als Puffermechanismus der vorstehend beschriebenen Art fungiert.

Zur Verbesserung der Aktuierungsdynamik der Kupplung 10 ist ein Sensor 36 vorgesehen, der einen Sensorstift 36a und ein Sensorelement 36b umfasst. Das ortsfest installierte Sensorelement 36b ermöglicht die Bestimmung einer relativen Position des Sensorstifts 36a und damit der Schaltgabel 26'. Letztlich lässt sich durch die Messdaten des Sensorelements 36b bestimmen, in welcher Position sich das Kupplungsteil 10b relativ zu dem axialfest angeordneten Kupplungsteil 10a befindet. Da die Geometrie der Zähne 12a und der Ausnehmungen 12b bekannt ist, kann der zu durchfahrende Totraum der Kupplung 10 bestimmt werden, der in einem geöffneten Zustand der Kupplung 10 vorliegt.

Es versteht sich, dass der Sensor 36 in analoger Weise zur Positionsbestimmung der Schaltgabel 26 der Fig. 1 und 2 vorgesehen sein kann. Alternative oder zusätzliche Sensoren zur Bestimmung der Position des Kupplungsteils 10b und/oder des Kupplungsteils 10a sind beispielsweise Drehwinkelgeber am Aktuatormotor 22 oder an der Spindel 24, 24'.

Wie der Fig. 1 zu entnehmen ist, weisen die Zähne 12a Flanken auf, die nicht ganz parallel zu der Rotationsachse der Kupplungsteile 10a, 10b und der Antriebswelle 16 angeordnet sind. Die Flankenwinkel der Klauenverzahnung sind so ausgelegt, dass das Kräftegleichgewicht der Axialkraft aus einer abweisend ausgestalteten Klauenverzahnung und aus der Reibkraft in der Steckverzahnung des Kupplungsteils 10b auf der Antriebswelle 16 unter allen Reibverhältnissen ausgewogen ist. Damit kann sichergestellt werden, dass der Aktuator 20, 20' in einem geschlossenen und belasteten Zustand nur geringe Axialkräfte aufnehmen muss und daher nur geringe Halteströme am Aktuatormotor 22 erforderlich sind. Ferner kann die zum Öffnen der Kupplung 10 unter Belastung erforderliche Axialkraft durch eine geeignete Wahl der Flankenwinkel der Zähne 12a beeinflusst und damit an verschiedene Anforderungen angepasst werden.

### Bezugszeichenliste

- 10: Klauenkupplung
- 10a, 10b: Kupplungsteil
- 12a: Zahn
- 12b: Ausnehmung
- 14: Zahnrad
- 16: Antriebswelle
- 17: Radflansch
- 18: Lager
- 20, 20': Aktuator
- 22: Aktuatormotor
- 24, 24': Spindel
- 26, 26': Schaltgabel
- 28: Lagerstift
- 30: Rillenkugellager
- 31: Drehgelenk
- 32: Schlitz
- 34, 34': Mutter
- 36: Sensor
- 36a: Sensorstift
- 36b: Sensorelement

## Patentansprüche

1. Verfahren zum Betrieb eines Antriebsstrangs eines Kraftfahrzeugs mit einem Motor, der mittels einer durch einen Aktuator (20) aktuierbaren Kupplung (10) selektiv mit dem Antriebsstrang koppelbar ist, die ein erstes, einer Antriebswelle des Motors zugeordnetes Kupplungsteil (10a oder 10b) und ein zweites, dem Antriebsstrang zugeordnetes Kupplungsteil (10b bzw. 10a) aufweist, **dadurch gekennzeichnet, dass** ein Einrücken der Kupplung (10) die Schritte umfasst:
- Beschleunigung des ersten Kupplungsteils (10a oder 10b) durch den Motor zur Verringerung einer Drehzahldifferenz zwischen dem ersten Kupplungsteil (10a oder 10b) und dem zweiten Kupplungsteil (10b bzw. 10a) bei gleichzeitiger Aktivierung des Aktuators (20) während einer ersten Aktuierungsphase zur Überwindung eines Totraums der Kupplung (10), bei dem die Kupplungsteile (10a, 10b) noch nicht miteinander in Eingriff sind,
- Aussetzen der Aktivierung des Aktuators (20) nach Überwindung des Totraums und vor Ineingriffbringen der Kupplungsteile (10a, 10b), solange eine vorgegebene Drehzahldifferenz noch nicht erreicht ist,
- erneute Aktivierung des Aktuators (20) während einer zweiten Aktuierungsphase zum Ineingriffbringen der Kupplungsteile (10a, 10b), wenn die vorgegebene Drehzahldifferenz erreicht oder unterschritten ist.

2. Verfahren nach Anspruch 1,
**dadurch gekennzeichnet, dass**
dem Aktuator (20) eine Überwachungseinrichtung zugeordnet ist, mit der zumindest während der zweiten Aktuierungsphase ein Überwachungssignal erzeugt wird, das eine das Ineingriffbringen der Kupplung (10) verhindernde Situation anzeigt.

3. Verfahren nach Anspruch 2,
**dadurch gekennzeichnet, dass**
der Aktuator (20) einen elektrisch betriebenen Akuatormotor (22) umfasst und dass durch die Überwachungseinrichtung zur Erzeugung des Überwachungssignals die an dem Aktuatormotor (22) anliegende Spannung und/oder der an dem Aktuatormotor (22) anliegende Strom bestimmt wird.

4. Verfahren nach Anspruch 2 oder 3,
**dadurch gekennzeichnet, dass**
die Aktivierung des Aktuators (20) während der zweiten Aktuierungsphase zumindest so lange gedrosselt wird, solange das Überwachungssignal einen Schwellenwert überschreitet oder unterschreitet.

5. Verfahren nach zumindest einem der vorstehenden Ansprüche,
**dadurch gekennzeichnet, dass**
dem Aktuator ein Energiespeicher zugeordnet ist, der während einer das Ineingriffbringen der Kupplung (10) verhindernden Situation - insbesondere während der gedrosselten Aktivierung des Aktuators (20) - zumindest einen Teil der durch den Aktuator (20) erzeugten Aktuierungsbewegung in eine Aktuierungsenergie umwandelt und diese speichert.

6. Verfahren nach Anspruch 5,
**dadurch gekennzeichnet, dass**
die von dem Energiespeicher aufgenommene Aktuierungsenergie abgegeben wird, sobald die das Ineingriffbringen der Kupplung (10) verhindernde Situation aufgehoben wird.

7. Verfahren nach zumindest einem der vorstehenden Ansprüche, **dadurch gekennzeichnet, dass**
der zu überwindende Totraum der Kupplung (10) auf der Basis von Daten eines Sensors (36) ermittelt wird, mit dem eine Stellung des ersten Kupplungsteils (10a oder 10b) und/oder des zweiten Kupplungsteils (10b bzw. 10a) bestimmbar ist.

8. Antriebsstrang eines Kraftfahrzeugs mit einem einen Motor, der mittels einer durch einen Aktuator (20) aktuierbaren Kupplung (10) selektiv mit dem Antriebsstrang koppelbar ist, die ein erstes, einer Antriebswelle des Motors zugeordnetes Kupplungsteil (10a oder 10b) und ein zweites, dem Antriebsstrang zugeordnetes Kupplungsteil (10b bzw. 10a) aufweist, **dadurch gekennzeichnet, dass** dem Motor eine Motorsteuereinheit zugeordnet ist und dem Aktuator (20) eine Aktuatorsteuereinheit zugeordnet ist, die derart ausgestaltet sind, das ein Verfahren gemäß zumindest einem der vorstehenden Ansprüche durchführbar ist.

9. Antriebsstrang nach Anspruch 8,
**dadurch gekennzeichnet, dass**
die Motorsteuereinheit und die Aktuatorsteuereinheit eine Baueinheit bilden.

10. Antriebsstrang nach Anspruch 8 oder 9,
**dadurch gekennzeichnet, dass**
die Kupplung eine Klauenkupplung (10) ist.

11. Antriebsstrang nach zumindest einem der Ansprüche 8 bis 10, **dadurch gekennzeichnet, dass**
der Motor ein Elektromotor ist, der insbesondere Bestandteil eines Hybridantriebs des Kraftfahrzeugs ist.

## Claims

1. Method for operating a drivetrain of a motor vehicle, having a motor which can be selectively coupled to the drivetrain by means of a clutch (10) which can be actuated by an actuator (20), which clutch has a first clutch part (10a or 10b) assigned to a drive shaft of the motor and a second clutch part (10b or 10a) assigned to the drivetrain, **characterized in that** the engagement of the clutch (10) comprises the steps:
- acceleration of the first clutch part (10a or 10b) by means of the motor in order to reduce a rotational speed difference between the first clutch part (10a or 10b) and the second clutch part (10b or 10a), with simultaneous activation of the actuator (20) during a first actuation phase in order to overcome an idle travel of the clutch (10) in which the clutch parts (10a, 10b) are not yet in engagement with one another,
- interruption of the activation of the actuator (20) after the idle travel is overcome, and before the clutch parts (10a, 10b) are brought into engagement, for as long as a predefined rotational speed difference has not yet been reached,
- reactivation of the actuator (20) during a second actuation phase, in order to bring the clutch parts (10a, 10b) into engagement, when the predefined rotational speed difference is reached or undershot.

2. Method according to Claim 1,
**characterized in that**
the actuator (20) is assigned a monitoring device by means of which, at least during the second actuation phase, a monitoring signal is generated which indicates a situation which prevents the engagement of the clutch (10).

3. Method according to Claim 2,
**characterized in that**
the actuator (20) comprises an electrically operated actuator motor (22) and **in that** the voltage applied to the actuator motor (22) and/or the current applied to the actuator motor (22) is determined by means of the monitoring device for generating the monitoring signal.

4. Method according to Claim 2 or 3,
**characterized in that**
the activation of the actuator (20) during the second actuation phase is restricted for at least as long as the monitoring signal exceeds or undershoots a threshold value.

5. Method according to at least one of the preceding claims,
**characterized in that**
the actuator is assigned an energy store which, during a situation which prevents the engagement of the clutch (10), in particular during the restricted activation of the actuator (20), converts at least a part of the actuation movement generated by the actuator (20) into actuation energy, and stores said actuation energy.

6. Method according to Claim 5,
**characterized in that**
the actuation energy absorbed by the energy store is released when the situation which prevents the engagement of the clutch (10) is eliminated.

7. Method according to at least one of the preceding claims,
**characterized in that**
the idle travel of the clutch (10) which is to be overcome is determined on the basis of data from a sensor (36) by means of which a position of the first clutch part (10a or 10b) and/or of the second clutch part (10b or 10a) can be determined.

8. Drivetrain of a motor vehicle having a motor which can be selectively coupled to the drivetrain by means of a clutch (10) which can be actuated by an actuator (20), which clutch has a first clutch part (10a or 10b) assigned to a drive shaft of the motor and a second clutch part (10b or 10a) assigned to the drivetrain, **characterized in that** the motor is assigned a motor control unit and the actuator (20) is assigned an actuator control unit, which control units are configured such that a method according to at least one of the preceding claims can be carried out.

9. Drivetrain according to Claim 8,
**characterized in that**
the motor control unit and the actuator control unit form a structural unit.

10. Drivetrain according to Claim 8 or 9, **characterized in that**
the clutch is a jaw clutch (10).

11. Drivetrain according to at least one of Claims 8 to 10,
**characterized in that**
the motor is an electric motor, which is in particular a constituent part of a hybrid drive of the motor vehicle.

## Revendications

1. Procédé pour faire fonctionner une chaîne cinématique d'un véhicule automobile comprenant un moteur qui peut être accouplé de manière sélective à la chaîne cinématique au moyen d'un embrayage (10) pouvant être actionné par un actionneur (20), lequel embrayage comprend une première partie d'embrayage (10a ou 10b) associée à un arbre d'entraînement du moteur et une deuxième partie d'embrayage (10b respectivement 10a) associée à la chaîne cinématique, **caractérisé en ce qu'**un embrayage de l'embrayage (10) comporte les étapes suivantes :
- accélération de la première partie d'embrayage (10a ou 10b) par le moteur pour réduire une différence de vitesse de rotation entre la première partie d'embrayage (10a ou 10b) et la deuxième partie d'embrayage (10b respectivement 10a) lors de l'activation simultanée de l'actionneur (20) pendant une première phase d'actionnement pour franchir un espace mort de l'embrayage (10) pour lequel les parties d'embrayage (10a, 10b) ne sont pas encore en prise l'une avec l'autre,
- interruption de l'activation de l'actionneur (20) après le franchissement de l'espace mort et avant la mise en prise des parties d'embrayage (10a, 10b) tant qu'une différence de vitesse de rotation prédéfinie n'a pas encore été atteinte,
- activation à nouveau de l'actionneur (20) pendant une deuxième phase d'actionnement pour la mise en prise des parties d'embrayage (10a, 10b) lorsque la différence de vitesse de rotation prédéfinie est atteinte ou que l'on passe en dessous de celle-ci.

2. Procédé selon la revendication 1,
**caractérisé en ce**
**qu'**un dispositif de contrôle est associé à l'actionneur (20), à l'aide duquel dispositif de contrôle est produit, au moins pendant la deuxième phase d'actionnement, un signal de contrôle qui indique une situation empêchant la mise en prise de l'embrayage (10).

3. Procédé selon la revendication 2,
**caractérisé en ce que**
l'actionneur (20) comporte un moteur d'actionneur (22) à commande électrique et **en ce que** la tension appliquée au moteur d'actionneur (22) et/ou le courant appliqué au moteur d'actionneur (22) sont déterminés par le dispositif de contrôle destiné à produire le signal de contrôle.

4. Procédé selon la revendication 2 ou 3,
**caractérisé en ce que**
l'activation de l'actionneur (20) est réduite pendant la deuxième phase d'actionnement au moins tant que le signal de contrôle passe au-dessus ou au-dessous d'une valeur seuil.

5. Procédé selon au moins l'une quelconque des revendications précédentes,
**caractérisé en ce**
**qu'**un accumulateur d'énergie est associé à l'actionneur, lequel accumulateur d'énergie convertit au moins une partie du déplacement d'actionnement produit par l'actionneur (20) en une énergie d'actionnement et stocke celle-ci pendant une situation empêchant la mise en prise de l'embrayage (10), en particulier pendant l'activation réduite de l'actionneur (20).

6. Procédé selon la revendication 5,
**caractérisé en ce que**
l'énergie d'actionnement reçue par l'accumulateur d'énergie est restituée dès qu'il est mis fin à la situation empêchant la mise en prise de l'embrayage (10).

7. Procédé selon au moins l'une quelconque des revendications précédentes,
**caractérisé en ce que**
l'espace mort à franchir de l'embrayage (10) est détecté sur la base de données d'un capteur (36) à l'aide duquel une position de la première partie d'embrayage (10a ou 10b) et/ou de la deuxième partie d'embrayage (10b respectivement 10a) peut être déterminée.

8. Chaîne cinématique d'un véhicule automobile comprenant un moteur qui peut être accouplé de manière sélective à la chaîne cinématique au moyen d'un embrayage (10) pouvant être actionné par un actionneur (20), lequel embrayage comprend une première partie d'embrayage (10a ou 10b) associée à un arbre d'entraînement du moteur et une deuxième partie d'embrayage (10b respectivement 10a) associée à la chaîne cinématique, **caractérisée en ce qu'**une unité de commande de moteur est associée au moteur et une unité de commande d'actionneur est associée à l'actionneur (20), lesquelles unités de commande sont configurées de telle sorte qu'un procédé selon au moins l'une quelconque des revendications précédentes puisse être mis en oeuvre.

9. Chaîne cinématique selon la revendication 8, **caractérisée en ce que**
l'unité de commande de moteur et l'unité de commande d'actionneur forment une unité constructive.

10. Chaîne cinématique selon la revendication 8 ou 9, **caractérisée en ce que**
l'embrayage est un embrayage à griffes (10).

11. Chaîne cinématique selon au moins l'une quelconque des revendications 8 à 10,
**caractérisée en ce que**
le moteur est un moteur électrique qui fait en particulier partie d'un entraînement hybride du véhicule automobile.
